Europäisches Patentamt

European Patent Office

Office européen des brevets

(11) Publication number: **0 133 316 B1**

# EUROPEAN PATENT SPECIFICATION

(45) Date of publication of patent specification: **17.01.90**

(51) Int. Cl.⁵: **B 60 J 1/17**

(21) Application number: **84108947.7**

(22) Date of filing: **27.07.84**

(54) Vehicle door structure.

(30) Priority: **27.07.83 JP 116825/83 u**

(43) Date of publication of application:
**20.02.85 Bulletin 85/08**

(45) Publication of the grant of the patent:
**17.01.90 Bulletin 90/03**

(84) Designated Contracting States:
**DE FR GB**

(56) References cited:
**DE-C- 946 951**

(73) Proprietor: **TOYOTA JIDOSHA KABUSHIKI KAISHA**
**1, Toyota-cho Toyota-shi**
**Aichi-ken 471 (JP)**

(72) Inventor: **Isetani, Hideki**
**TOYOTA JIDOSHA KABUSHIKI KAISHA 1,**
**Toyota-cho**
**Toyota-shi Aichi-ken (JP)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

Courier Press, Leamington Spa, England.

## Description

This invention relates to a vehicle door structure according to the pre-characterizing portion of claim 1.

Recently, in so-called sporty type motor vehicle, such for example as two-door type passenger cars, center pillar have been designed to lean forwardly to express a sporty feeling. In accordance thereto, such side doors have been used as to have rear frame members inclined forwardly along the center pillars.

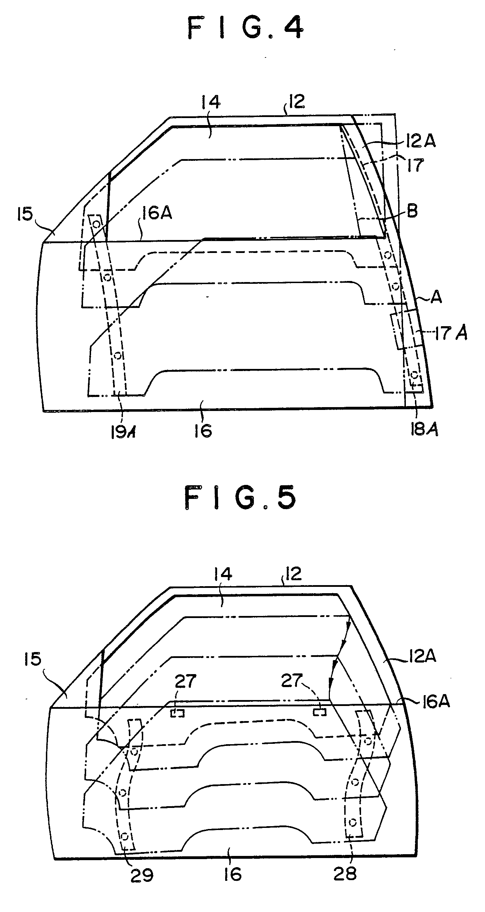

In the conventional vehicle door structure for opening or closing a window glass, as shown in Fig. 4, there has been provided a rear frame glass guide 17 formed at the front side of a rear frame member 12A and having U-shape in cross-section; a rear guide 18A formed from the top to the bottom in alignment with the rear frame glass guide 17 at the rear portion in door body 16; and a front guide 19A formed from the top to the bottom in parallel to the rear guide 18A to a position upwardly of a beltline 16A at the front portion in the door body 16; whereby a window glass 14 is guided in the vertical direction in a substantially horizontal posture by the rear and the front guides 18A and 19A while being held in a direction of the thickness thereof by the rear frame glass guide 17. In the drawing, designated at 15 is a triangular patch. In this case, the rigidity of holding the window glass 14 in the direction of its thickness in the position where the window glass 14 is open is high, so that the window glass 14 can be moved in the vertical direction without being unstable.

However, with the side door in which the rear frame member 12A is forwardly leaned, the window glass 14 is received in the door body 16 in such a manner that it is moved obliquely and rearwardly along the rear guide 18A being in alignment with the rear frame glass guide 17 at the front side of the rear frame member 12A, whereby the rearward bulge-out of the door body 16 is increased and necessity of securing a space for installing functional parts such as door lock means 17A and the like at the rear portion in the door body 16 disadvantageously leads to a further large-sized door. (Refer to solid lines A in Fig. 4).

To obviate the above-described disadvantage, there may be proposed a method of reducing the forwardly inclining angle of the front portion of the forwardly inclined rear frame member 12A to decrease the angle of the window glass 14 entering the interior of the door body 16 (Refer to two-dot chain line B in Fig. 4). However, in this case, the rear frame member 12A is increased in its width in the vicinity of the beltline 16A of the door body 16, thereby presenting such new disadvantages that the appearance is deteriorated and the field of view in the lateral direction is adversely affected.

Furthermore, in view of the fact that the window glass 14 is received in the door body 16 in a manner to be moved along the rear frame member 12A, whereby the rear portion of the door body 16 is bulged rearwardly, there may be proposed that, as shown in Fig. 5, at the front and the rear portions in the door body 16, there may be provided a rear guide 28 and a front guide 29 for engaging the bottom end portions in the front and the rear of the window glass 14 to determine the moving path of the window glass 14, and the window glass 14 is arranged to vertically move along the rear and the front guides 28 and 29, whereby, irrespective of the forwardly inclining angle of the rear frame member 12A, the window glass 14 is received in the door body 12 without the rear portion of the door body 16 being bulged out.

However, in this case, such a disadvantage is presented that, in the state where the window glass 14 is opened, only the lower end portion in the door body 16 of the door window 14 is held by a stabilizer 27, rear guide 28 and front guide 29, whereby the looseness of the upper portion of the window glass 14 in the direction of its thickness is increased.

It is therefore the primary object of the present invention to provide a vehicle door structure, wherein the rigidity of holding a window glass in a direction of its thickness is increased without increasing the lower portion of a rear frame member in its width and irrespective of the forwardly inclining angles of a door frame and the window glass, and moreover, the window glass can be received in a door body without making the door body large-sized.

This object is achieved by the features of the characterizing portion of claim 1.

According to the present invention, the window glass is constantly held in the direction of its thickness as it is opened, whereby the rigidity of holding it in the direction of its thickness is high. Moreover, the door glass is received in the door body in such a manner that its rear end edge is rocked about its forward end portion, so that the space for installing functional parts such as door lock means and the like can be provided without rendering the door body large in size beyond necessity.

Advantageous modifications derive from the subclaims.

Fig. 1 is a schematic side view showing the arrangement of an embodiment of the vehicle door structure according to the present invention;

Fig. 2 is an enlarged sectional view taken along the line II-II in Fig. 1;

Fig. 3 is an enlarged side view showing a door glass piece;

Figs. 4 and 5 are schematic side views showing the arrangement of a conventional vehicle door structure.

Same reference characters shown in the vehicle door structure as shown in Figs. 4 and 5 are used throughout the figures to designate same or similar parts, so that detailed description will be omitted.

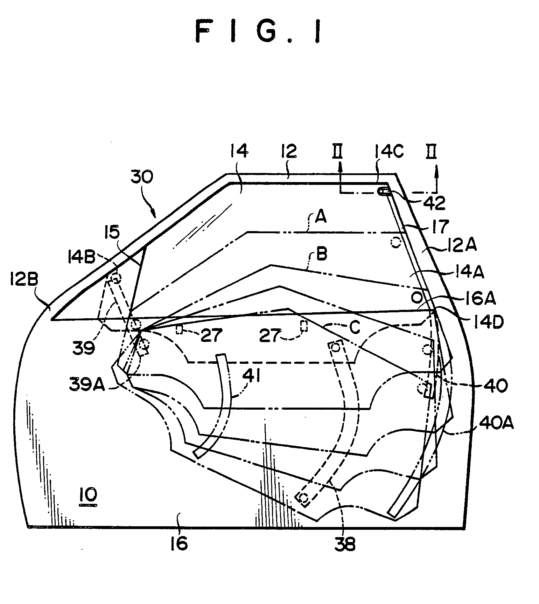

As shown in Fig. 1, a vehicle door structure 30 for a motor vehicle having a glass guide includes a rear frame glass guide 17 in a side door 10 having an upper frame member 12 integrally formed with a forwardly inclined rear frame member 12A, for guiding a rear end edge 14A of a window glass 14 in the vertical direction and restraining the rear end edge 14A of the window glass 14 in the direction of the thickness of the window glass 14, a front guide 39 for guiding a front slider member 14B of the window glass 14 in the vertical direction at least to below the beltline 16A of a door body 16 and restraining the front slider member 14B of the window glass 14 in the direction of the thickness thereof; the glass guide is constructed such that the window glass 14 is guided parallelly along the rear frame member 12A within a range from a fully closed position of the window glass 14 to an initial window opening movement, e.g. a substantially half-open position (indicated by two-dot chain line A in the drawing) and the rear end edge 14A of the window glass 14 is guided in a manner to rock about a bottom end position of the front guide 39 within the range from a fully open position of the window glass 14 to an initial window closing movement.

In addition to the rear frame glass guide 17 and the front guide 39, the glass guide further comprises a further rear guide 40 at the rear end of the window glass 14, for guiding a top slider member 14C of the rear end edge 14A of the window glass 14 in the door body 16 along a rocking path of the top slider member 14C about the front slider member 14B of the window glass 14; and a rear guide 38 for guiding the lower rear portion of the window glass 14 along vertically moving and rocking paths of the lower rear portion of the window glass 14 in the door body 16.

The front guide 39 is formed substantially in parallel to the rear frame glass guide 17 from the interior of the rear end of a triangular patch 15 formed at a position between the forward end portion of the beltline 16A and a front frame member 12B to the upper side of the interior of the door body 16.

The further rear guide 40 at the rear end of the window glass 14 is formed into a circularly arcuate shape along the rocking path of the top slider member 14C of the rear end edge 14A of the window glass 14 about the bottom end position 39A of the front guide 39 from the bottom end portion of the rear frame member 12A to the interior of the door body 16.

The rear guide 38 is continuously formed in the rear portion of the interior of the door body 16 along a moving path including a vertically moving path substantially rectilinear and parallel to the rear frame glass guide 17 in the lower rear portion of the window glass 14; and a circularly arcuate rocking path continuing to downwardly from the vertically moving path and rocking about the bottom end position 39A of the front guide 39.

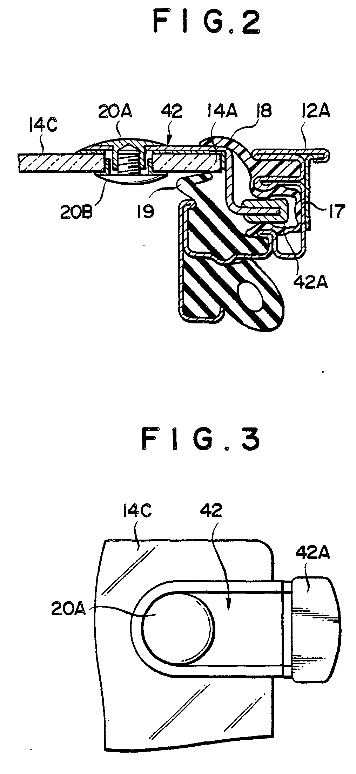

Further, as shown in Figs. 2 and 3, secured to the top slider member 14C of the rear end edge 14A of the window glass 14 is a substantially crank-shaped door glass piece 42 having offset therefrom into the compartment a forward end slide portion 42A guided by the rear frame glass guide 17 and the further rear guide 40 on the side of the rear end of the window glass 14 whereby a difference in stage in the direction of the thickness of the window glass 14 is given from the rear end edge 14A of the window glass 14 to the rear frame glass guide 17 and the further rear guide 40 at the rear end of the window glass 14. In consequence, the further rear guide 40 can hold the top slider member 14C of the rear end edge 14A of the window glass 14 in the direction of the thickness thereof and guide the same without interfering the bottom end portion of the rear end edge 14A of the window glass 14 as the rear end edge 14A of the window glass 14 is moved in the vertical direction and displaced rockingly.

In the drawing, designated at 18 is a glass run for sealing the outer surface of the rear end edge 14A of the window glass 14, 19 a glass weather strip for sealing between the rear end edge 14A of the window glass 14 and the rear frame member 12A, 20A a fixing nut and 20B a fixing screw.

Description will now be given of action of this embodiment.

During the window opening operation the window glass 14 descends in the substantially horizontal posture along the rear guide 38 and the front guide 39 with the rear end edge 14A thereof being held in the direction of the thickness thereof, within the range from the fully closed position to the substantially half-open position (indicated by two-dot chain line A in Fig. 1).

Within the range from the substantially half-open position to the substantially 2/3-open position (indicated by two-dot chain line B in Fig. 1), the front slider member 14B of the window glass 14 moves along the front guide 39 to the bottom end position 39A, and simultaneously, the rear end edge 14A of the window glass 14 descends, rocking about the front slider member 14B of the window glass 14 in the clockwise direction in the drawing.

At this time, the top slider member 14C of the rear end edge 14A of the window glass 14 is displaced along the rear frame glass guide 17, drawing a circularly arcuately moving path being approximate to a straight line. In consequence, the shape of the rear frame glass guide 17 can be formed into a substantially rectilinear shape, and the door window 14 can be held in its thickness direction without making the width of the rear frame member 12A large.

Further, within the range from the substantially 2/3-open position to the fully open position (indicated by two-dot chain line C in Fig. 1), the rear end edge 14A of the window glass 14 rotates about the front slider member 14B of the window glass 14 located at the bottom end position 39A of the front guide 39 further in the clockwise direction, whereby the window glass 14 is received in the door body 16.

Additionally, in the case of closing operation of the window glass 14, the preceding steps are reversed.

According to this embodiment, the window glass 14 is lowered in a substantially horizontal posture along the rear frame glass guide 17, thereafter, the side of the rear end edge 14A of the window glass 14 is rockingly rotated about the front slider member 14B of the window glass 14, and the window glass 14 is received in the door body 16, whereby, even if the forwardly leaning angles of the rear frame member 12A and the window glass 14 are large, the latter can be constantly held in the direction of its thickness without making the lower portion of the rear frame member 12A have a large width, and without making the rear side of the door body 16 bulge out, so that the rigidity of holding the window glass 14 can be increased and looseness in the top portion of the window glass 14 can be suppressed.

Furthermore, in the case of this embodiment, the front guide 39 is provided from the triangular patch 15 to the upper portion of the interior of the door body 16, so that the fulcrum, about which the window glass 14 rockingly rotates, which is to be located at the bottom end position 39A of the front guide 39 can be positioned at an upper portion of the door body 16 close to the beltline 16A in the door body 16, thereby advantageously eliminating necessity of unnecessarily enlarging the door body 16 in size due to the increase in height of the bottom end position of the rocking path of the window glass 14 to the downward direction.

Further, the window glass 14 is of such an arrangement as to rotatably move, descending from the substantially half-open position, so that, even with the straight-lined rear frame member 12A, the rear end edge 14A of the window glass 14 can be constantly restrained by the rear frame member 12A in the direction of the thickness of the window glass 14. However, the arrangement of the glass guide need not necessarily be limited to this, and, for example, such an arrangement may be adopted that the front guide 39 is formed in parallel with the rear frame member 12A, whereby the window glass 14 is parallelly moved to the bottom end position 39A of the front guide 39, and thereafter, the side of the rear end edge 14A of the window glass 14 is rockingly rotated about the front slider member 14B of the window glass 14.

Furthermore, in the above embodiment, the rear guide 38 is provided for guiding the window glass 14 in the door body 16, however, for example, when the rigidity of holding the window glass 14 in the door body 16 by the further rear guide 40 at the rear end of the window glass 14 is satisfactory, there is no need of providing the rear guide 38, and, such an arrangement may be adopted that, to reliably guide the window glass 14, a center guide (indicated by two-dot chain line 41 in Fig. 1) may be provided between the rear guide 38 and the front guide 39.

Further, in the above embodiment, to hold the window glass 14, the door glass piece 42 secured to the top slider member 14C of the rear end edge 14A of the window glass 14 is held by the rear frame glass guide 17 and the further rear guide 40 at the rear end of the window glass 14, however, for example, such an arrangement may be adopted that, in place of the aforesaid further rear guide 40 at the rear end of the window glass 14, a guide at the rear end of the window glass 14, for clamping its rear end edge 14A is provided in the door body 16, whereby, the rear end edge 14A of the window glass 14 is held in the direction of its thickness by the rear frame glass guide 17 in an area upwardly of the beltline 16A and the rear end edge 14A of the window glass 14 is held by the guide at the rear end of the window glass 14 in a manner to extend rearwardly in an area downwardly of the beltline 16A.

Furthermore, in the above embodiment, such an arrangement may be adopted that there is additionally provided a second guide at the rear end of the window glass (refer to two-dot chain lines 40A in Fig. 1), for holding the lower end portion of the rear end edge 14A of the window glass 14 in the direction of its thickness in the door body 16 and guiding the same, and further, door glass pieces similar to that in the above embodiment are secured to the front slider member 14B and a bottom end portion 14D of the window glass 14, whereby a difference in stage in the direction of the thickness of the window glass 14 is given from the surface of the window glass 14 to the rear frame glass guide 17, the front guide 39, the further rear guide 40 at the rear end of the window glass 14 and the second guide 40A at the rear end of the window glass 14. This arrangement is suitable for use in a side door 10 in which the surface of the window glass 14 and the outer surface of the side door 10 are made flush with each other.

**Claims**

1. A vehicle door structure comprising a door body (16) whose top extends along the beltline (16A) of the vehicle, a front frame member (12B), an upper frame member (12) and a forwardly inclined rear frame member (12A), said frame members (12B, 12, 12A) defining with said beltline (16A) of said door body (16) a window aperture, said rear frame member (12A) being provided with a rear frame glass guide (17) and a further rear guide (40) disposed within said door body (16) for guiding the rear end edge (14A) of a window glass (14) in the vertical direction and for restraining said rear end edge (14A) of said window glass (14) in the direction of the thickness of said window glass (14), a front guide (39) being provided for guiding a front slider member (14B) in the vertical direction said front slider member (14B) being fixed to said front end edge of said window glass (14) and slidably mounted within said front guide (39) and for restraining said front end edge of said window glass (14) in the direction of the thickness of said window glass (14), such that said window glass (14) is vertically movable between its fully closed and half-open positions (A) with its rear end edge (14A) sliding along said rear frame glass guide (17), characterized in that a top slider member (14C) is fixed to the top of said rear end edge (14A) of said window glass (14) and slidably mounted within said rear frame glass guide (17) above said beltline (16A) whereby said further rear guide (40) guides said top slider member (14C) or part of said rear end edge (14A) such that said window glass (14) is movable between its half-open and its fully-open positions (A, C) as its front slider member (14B) moves within the lower portion of said front guide (39) whereas said window glass (14) rotates about said front slider member (14B) as an instantaneous axis of rotation.

2. A vehicle door structure as set forth in claim 1, wherein said front guide (39) is formed in parallel to said rear frame member (12A), said window glass (14) is parallelly moved downwardly until said front slider member (14B) reaches a bottom end position (39A) of said front guide (39), and thereafter, said rear end edge (14A) of said window glass (14) is rockingly rotated about said front slider member (14B) of said window glass (14).

3. A vehicle door structure as set forth in claim 1 or 2, further comprising a rear guide (38) disposed in said door body (16) for guiding the lower rear portion of said window glass (14) along its vertically moving and rocking path.

4. A vehicle door structure as set forth in claim 2 or 3, wherein said further rear guide (40) is formed into a circularly arcuate shape along the rocking path of said top slider member (14C) about said bottom end position (39A) of said front guide (39) from the bottom end portion of said rear frame member (12A) to the interior of said door body (16).

5. A vehicle door structure as set forth in one of claims 1 to 4, wherein said front guide (39) is formed substantially in parallel to said rear frame glass guide (17) from the interior of the rear end of a triangular patch (15) formed between the forward end portion of said beltline (16A) and said front frame member (12B) to the upper side of the interior of said door body (16).

6. A vehicle door structure as set forth in one of claims 3 to 5, wherein said rear guide (38) is continuously formed in a rear portion of the interior of said door body (16) along a moving path including a vertically moving path substantially rectilinear and parallel to said rear frame glass guide (17) in the lower rear portion of said window glass (14) and a circularly arcuate rocking path extending downwardly from the vertically moving path and bent about said bottom end position (39A) of said front guide (39).

7. A vehicle door structure as set forth in one of claims 3 to 6, wherein secured to said top slider member (14C) is a substantially crank-shaped door glass piece (42) having offset therefrom into the compartment a forward end slide portion (42A) guided by said rear frame glass guide (17) and said further rear guide (40), whereby a difference in stage in the direction of the thickness of said window glass (14) is given from said rear end edge (14A) of said window glass (14) to said rear frame glass guide (17) and said further rear guide (40).

**Patentansprüche**

1. Konstruktion einer Fahrzeugtür mit einem Türkörper (16), dessen Oberteil längs einer Gürtellinie (16A) des Fahrzeugs verläuft, mit einem vorderen Rahmenteil (12B), einem oberen Rahmenteil (12) sowie einem vorwärts geneigten rückwärtigen Rahmenteil (12A), wobei diese Rahmenteile (12B, 12, 12A) mit der Gürtellinie (16A) des Türkörpers (16) eine Fensteröffnung abgrenzen, das rückwärtige Rahmenteil (12A) mit einer rückwärtigen Rahmen-Fensterführung (17) versehen sowie eine weitere rückwärtige Führung (40) innerhalb des Türkörpers (16) angeordnet ist, um die hintere Endkante (14A) einer Fensterscheibe (14) in der vertikalen Richtung zu führen sowie diese hintere Endkante (14A) der Fensterscheibe (14) in der Richtung der Dicke dieser Fensterscheibe (14) bewegungsseitig zu beschränken, und mit einer vorderen Führung (39), die zum Führen eines vorderen Gleitelements (14B), welches an der vorderen Endkante der Fensterscheibe (14) befestigt sowie verschiebbar innerhalb der vorderen Führung (39) gehalten ist, in der vertikalen Richtung und zur bewegungsseitigen Beschränkung dieser vorderen Endkante der Fensterscheibe (14) in der Richtung der Dicke dieser Fensterscheibe (14) vorgesehen ist, so daß die besagte Fensterscheibe (14) zwischen ihrer völlig geschlossenen und halb geöffneten Positon (A) vertikal bewegbar ist, wobei ihre hintere Endkante (14A) längs der rückwärtigen Rahmen-Fensterführung (17) gleitet, dadurch gekennzeichnet, daß ein oberes Gleitelement (14C) an der Oberseite der hinteren Endkante (14A) der Fensterscheibe (14) befestigt und verschiebbar innerhalb der rückwärtigen Rahmen-Fensterführung (17) oberhalb der besagten Gürtellinie (16A) gehalten ist, wobei die weitere rückwärtige Führung (40) das obere Gleitelement (14C) oder einen Teil der hinteren Endkante (14A) derart führt, daß die Fensterscheibe (14) zwischen ihrer halb geöffneten sowie ihrer ganz geöffneten Position (A, C) bewegbar ist, indem ihr vorderes Gleitelement (14B) sich innerhalb des unteren Teils der besagten vorderen Führung (39) bewegt, während die Fensterscheibe (14) um das vordere Gleitelement (14B) als eine momentane Drehachse dreht.

2. Konstruktion einer Fahrzeugtür nach Anspruch 1, wobei die vordere Führung (39) parallel zum rückwärtigen Rahmenteil (12A) ausgebildet ist, die Fensterscheibe (14) parallel abwärts bewegt wird, bis das vordere Gleitelement (14B) eine untere Endposition (39A) der vorderen Führung (39) erreicht, und danach die hintere Endkante (14A) der Fensterscheibe (14) schwingend um das vordere Gleitelement (14B) der Fensterscheibe (14) gedreht wird.

3. Konstruktion einer Fahrzeugtür nach Anspruch 1 oder 2, wobei die Konstruktion ferner eine rückwärtige, innerhalb des Türkörpers, (16)

EP 0 133 316 B1

angeordnete Führung (38) umfaßt, welche den unteren, rückwärtigen Teil der Fensterscheibe (14) entlang seiner vertikalen Bewegungs- und Schwingbahn führt.

4. Konstruktion einer Fahrzeugtür nach Anspruch 2 oder 3, wobei die weitere rückwärtige Führung (40) zu einer kreisbogenförmigen Gestalt längs der Schwingbahn des oberen Gleitelements (14C) um die untere Endposition (39A) der vorderen Führung (39) herum von unteren Endteil des rückwärtigen Rahmenteils (12A) zum Inneren des Türkörpers (16) ausgebildet ist.

5. Konstruktion einer Fahrzeugtür nach einem der Ansprüche 1 bis 4, wobei die vordere Führung (39) im wesentlichen parallel zur rückwärtigen Rahmen-Fensterführung (17) vom Inneren des rückwärtigen Endes eines zwischen dem vorderen Endabschnitt der besagten Gürtellinie (16A) und dem besagten vorderen Rahmenteil (12B) ausgestalteten dreieckigen Einsatzstücks (15) zur oberen Seite des Inneren des Türkörpers (16) ausgebildet ist.

6. Konstruktion einer Fahrzeugtür nach einem der Ansprüche 3 bis 5, wobei die rückwärtige Führung (38) durchlaufend in einem rückwärtigen Teil des Inneren des Türkörpers (16) längs einer Bewegungsbahn ausgebildet ist, die eine im wesentlichen geradlinige sowie zur rückwärtigen Rahmen-Fensterführung (17) parallele Vertikal-Bewegungsbahn im unteren, rückwärtigen Bereich der Fensterscheibe (14) und eine kreisbogenförmige Schwingbahn, die sich von der Vertikal-Bewegungsbahn abwärts erstreckt sowie um die untere Endposition (39A) der vorderen Führung (39) gekrümmt ist, einschließt.

7. Konstruktion einer Fahrzeugtür nach einem der Ansprüche 3 bis 6, wobei am oberen Gleitelement (14C) ein im wesentlichen kurbelförmiges Türscheibenstück (42) befestigt ist, das ein in den Passagierraum abgekröpftes vorderes Endgleitstück (42A) aufweist, welches von der rückwärtigen Rahmen-Fensterführung (17) und der weiteren rückwärtigen Führung (40) geführt ist, so daß sich eine stufenweise Differenz in der Richtung der Dicke der Fensterscheibe (14) von der hinteren Endkante (14A) der Fensterscheibe (14) zu der rückwärtigen Rahmen-Fensterführung (17) sowie der weiteren rückwärtigen Führung (40) ergibt.

**Revendications**

1. Structure de portière de véhicule comprenant un corps (16) de portière dont le sommet s'étend le long de la ligne de ceinture (16A) du véhicule, un élément avant (12B) de cadre, un élément supérieur (12) de cadre et un élément arrière (12A) de cadre incliné vers l'avant, lesdits éléments (12B, 12, 12A) de cadre définissant avec ladite ligne de ceinture (16A) dudit corps (16) de portière une ouverture pour vitre, ledit élément arrière (12A) de cadre étant muni d'un guide arrière (17) de cadre de vitre et d'un guide arrière supplémentaire (40) disposé à l'intérieur dudit corps (16) de portière, en vue de guider le bord (14A) d'extrémité arrière d'une vitre (14) de portière dans le sens vertical et d'empêcher le déplacement dudit bord (14A) d'extrémité arrière de ladite vitre (14) de portière dans le sens de l'épaisseur de ladite vitre (14) de portière, un guide avant (39) étant ménagé en vue de guider un élément coulissant avant (14B) dans le sens vertical, ledit élément coulissant avant (14B) étant fixé audit bord d'extrémité avant de ladite vitre (14) de portière et étant monté de façon coulissante à l'intérieur dudit guide avant (39), et en vue d'empêcher le déplacement dudit bord d'extrémité avant de ladite vitre (14) de portière dans le sens de l'épaisseur de ladite vitre (14) de portière, de façon telle que ladite vitre (14) de portière puisse se déplacer verticalement entre une position de fermeture complète et une position de demi-ouverture (A), son bord (14A) d'extrémité arrière coulissant le long dudit guide arrière (17) de cadre de vitre, caractérisé en ce qu'un élément coulissant supérieur (14C) est fixé à la partie supérieure dudit bord (14A) d'extrémité arrière de ladite vitre (14) de portière et est monté de façon coulissante à l'intérieur dudit guide arrière (17) de cadre de vitre au-dessus de ladite ligne de ceinture (16A), ledit guide arrière supplémentaire (40) guidant, de ce fait, ledit élément coulissant supérieur (14C) ou une partie dudit bord (14A) d'extrémité arrière de façon telle que ladite vitre (14) de portière puisse se déplacer entre sa position de demi-ouverture (A) et sa position d'ouverture complète (C) lorsque son élément coulissant avant (14B) se déplace à l'intérieur de la partie inférieure dudit guide avant (39) tandis que ladite vitre (14) de portière pivote autour dudit élément coulissant avant (14B) servant d'axe de rotation instantané.

2. Structure de portière de véhicule selon la revendication 1, dans laquelle ledit guide avant (39) est parallèle audit élément arrière (12A) de cadre, ladite vitre (14) de portière se déplaçant parallèlement vers le bas jusqu'à ce que ledit élément coulissant avant (14B) atteigne une position (39A) d'extrémité inférieure dudit guide avant (39), après quoi ledit bord d'extrémité arrière (14A) de ladite vitre (14) de portière est mis en pivotement autour dudit élément coulissant avant (14B) de ladite vitre (14) de portière.

3. Structure de portière de véhicule selon les revendications 1 ou 2, comprenant en outre un guide arrière (38) disposé dans ledit corps (16) de portière pour guider la partie arrière inférieure de ladite vitre (14) de portière sur un chemin de déplacement vertical et de pivotement.

4. Structure de portière de véhicule selon les revendications 2 ou 3, dans laquelle ledit guide arrière complémentaire (40) a une forme d'arc de cercle le long du chemin de pivotement dudit élément coulissant supérieur (14C) autour de ladite position (39A) d'extrémité inférieure dudit guide avant (39) à partir de la partie d'extrémité inférieure dudit élément arrière (12A) de cadre, jusque dans l'intérieur dudit corps (16) de portière.

5. Structure de portière de véhicule selon l'une des revendications 1 à 4, dans lequel ledit guide avant (39) est sensiblement parallèle audit guide arrière (17) de vitre de cadre à partir de l'intérieur de l'extrémité arrière d'une partie triangulaire (15) formée entre la partie d'extrémité avant de ladite ligne de ceinture (16A) et dudit élément avant (12B) de cadre, jusqu'au côté supérieur de l'intérieur dudit corps (16) de portière.

6. Structure de portière de véhicule selon l'une des revendications 3 à 5, dans laquelle ledit guide arrière (38) est formé de façon continue dans la partie arrière de l'intérieur dudit corps (16) de portière le long d'un chemin de déplacement comprenant un chemin de déplacement vertical sensiblement rectiligne et parallèle audit guide arrière (17) de cadre de vitre situé dans la partie arrière inférieure de ladite vitre (14) de portière et un chemin de déplacement par pivotement en forme d'arc de cercle s'étendant vers le bas à partir du chemin de déplacement vertical, et formant un coude au niveau de ladite position (39A) d'extrémité inférieure dudit guide avant (39).

7. Structure de portière de véhicule selon l'une des revendications 3 à 6, dans laquelle se trouve fixée audit élément coulissant supérieur (14C) une pièce (42) pour vitre de portière ayant sensiblement une forme de double coude se faisant face pièce comportant une partie coulissante (42A) d'extrémité avant décalée vers l'habitable, guidée par ledit guide arrière (17) de cadre de vitre et ledit guide arrière supplémentaire (40), une différence de niveau dans le sens de l'épaisseur de ladite vitre (14) de portière existant, de ce fait, entre ledit bord (14A) d'extrémité arrière de ladite vitre (14) de portière et ledit guide arrière (17) de cadre de vitre ainsi que le guide arrière supplémentaire (40).

# F I G . I

# FIG.2

# FIG.3

# F I G. 4

# F I G. 5